# EUROPEAN PATENT APPLICATION

(11) **EP 4 718 511 A1**
(43) Date of publication of application: **01.04.2026**
(21) Application number: 24811311.0
(22) Date of filing: 08.05.2024
(51) Int. Cl.: H01M 4/133, H01M 4/134, H01M 4/583, H01M 4/48, H01M 4/587, H01M 4/62, H01M 10/052, H01M 4/02

(54) **SECONDARY BATTERY ELECTRODE, AND SECONDARY BATTERY INCLUDING SAME**

(30) Priority: 23.05.2023 KR 20230066283
(71) Applicant: SK On Co., Ltd., Seoul 03161 (KR)
(72) Inventor: LEE, Yong Seok, Daejeon 34124 (KR); KIM, Sung Do, Daejeon 34124 (KR); KIM, Jeong A, Daejeon 34124 (KR); PARK, Sun Min, Daejeon 34124 (KR); SEO, Seung Deok, Daejeon 34124 (KR); CHOI, Young Ju, Daejeon 34124 (KR)
(74) Representative: Stolmár & Partner Patentanwälte PartG mbB
(86) International application number: PCT/KR2024/006140
(87) International publication number: WO 2024/242372

(57) **Abstract**

A negative electrode for a secondary battery according to exemplary embodiments may include: a negative electrode current collector; a first negative electrode active material layer formed on at least one surface of the negative electrode current collector and including a first negative electrode active material which contains at least one of a first carbon-based active material or a first silicon-based active material; and a second negative electrode active material layer formed on the first negative electrode active material layer and including a second negative electrode active material, which contains at least one of a second carbon-based active material or a second silicon-based active material, and a conductive polymer. Accordingly, resistance can be reduced without increasing the content of a conductive material, and rapid charging performance can be improved.

## Description

### [Technical Field]

The present disclosure relates to an anode for a secondary battery and a lithium secondary battery including the same. More specifically, the present disclosure relates to an anode for a secondary battery including an anode active material layer having a multilayer structure and a lithium secondary battery including the anode.

### [Background Art]

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric and hybrid vehicles.

Examples of secondary batteries may include a lithium secondary battery, a nickelcadmium battery, and a nickel-hydrogen battery. Among these, the lithium secondary battery has been actively developed and applied due to its high operating voltage, high energy density per unit weight, and advantages in charging speed and weight reduction.

For example, the lithium secondary battery may include: an electrode assembly including a cathode, an anode, and a separation membrane (separator); and an electrolyte that impregnates the electrode assembly. The lithium secondary battery may further include, for example, a pouch-type outer case that accommodates the electrode assembly and the electrolyte.

The anode may use a carbon-based active material or a silicon-based active material as the anode active material. However, the anode active material may suffer mechanical or chemical damage, such as particle cracking, during repeated charging and discharging cycles.

Changing the composition or structure of the anode active material to improve its stability may lower its electrical conductivity, thereby degrading the output properties of the secondary battery. Accordingly, there is a need to develop an anode active material that can simultaneously improve cycle-life stability and output properties.

### [Summary of Invention]

### [Problems to be Solved by Invention]

An object of the present disclosure is to provide an anode for a secondary battery having improved output properties and fast-charging performance.

Another object of the present disclosure is to provide a lithium secondary battery including an anode for a secondary battery having improved output properties and fast-charging performance.

### [Means for Solving Problems]

An anode for a secondary battery according to exemplary embodiments of the present disclosure may include: an anode current collector; a first anode active material layer formed on at least one surface of the anode current collector and including a first anode active material containing at least one of a first carbon-based active material and a first silicon-based active material; and a second anode active material layer formed on the first anode active material layer and including a second anode active material containing at least one of a second carbon-based active material and a second silicon-based active material and a conductive polymer.

In some embodiments, the first carbon-based active material may include a graphite-based active material.

In some embodiments, the first silicon-based active material and the second silicon-based active material may each include at least one of SiOx (0<x<2) and a silicon-carbon composite.

In some embodiments, the weight of the second carbon-based active material included in the second anode active material layer may be greater than the weight of the second silicon-based active material included in the second anode active material layer.

In some embodiments, the second silicon-based active material may be included in an amount of 2% by weight to 50% by weight based on the total weight of the second anode active material layer.

In some embodiments, the weight of the first carbon-based active material included in the first anode active material layer may be greater than the weight of the second carbon-based active material included in the second anode active material layer.

In some embodiments, the second anode active material layer may include a second conductive material including a carbon nanotube (CNT).

In some embodiments, the carbon nanotube may include a single-walled carbon nanotube (SWCNT).

In some embodiments, the single-walled carbon nanotubes may be included in an amount of 0.01% by weight to 1% by weight based on the total weight of the second anode active material layer.

In some embodiments, the carbon nanotubes may have a Raman R value of 0.5 or less, and the Raman R value may be defined as the ratio (I_{D}/I_{G}) of the intensity of the D band (I_{D}) and the intensity of the G band (I_{G}) in a Raman spectrum obtained through Raman spectroscopy.

In some embodiments, the weight ratio of the content of the conductive polymer in the second anode active material layer to the content of the carbon nanotube in the second anode active material layer may be 0.01 to 2.

In some embodiments, the first anode active material layer may not include a carbon nanotube.

In some embodiments, the conductive polymer may be formed from a monomer including at least one of poly(p-phenylene) (PPP), polypyrrole (PPy), polythiophene (PT), polyacetylene, polyaniline (PANI), and poly(3,4-ethylenedioxythiophene) (PEDOT).

In some embodiments, the first anode active material layer may not include a conductive polymer.

In some embodiments, the conductive polymer may be included in an amount of 0.01% by weight to 1.5% by weight based on the total weight of the second anode active material layer.

A lithium secondary battery according to exemplary embodiments of the present disclosure may include: the above-described anode for a secondary battery; and a cathode disposed opposite the anode.

### [Advantageous effects]

According to exemplary embodiments, the anode active material layer may be formed with a multilayer structure. In addition, an upper anode active material layer of the anode active material layer having a multilayer structure may include a conductive polymer. Accordingly, the resistance of the anode including the anode active material layer with a multilayer structure may be reduced without increasing the content of the conductive material. Furthermore, the reduced resistance may improve output properties and fast-charging performance.

According to some embodiments, the anode active material layer having a multilayer structure may include the carbon nanotubes, and the carbon nanotubes in the upper anode active material layer may have a Raman R value within a predetermined range. Accordingly, the degradation of cycle-life properties and stability due to an increase in the content of silicon-based active material in the upper anode active material layer may be suppressed. Furthermore, high-temperature stability may be improved by applying the carbon nanotube having a Raman R value within the predetermined range to the upper anode active material layer.

The anode for a lithium secondary battery of the present disclosure and the lithium secondary battery including the same may be widely applied in green technology fields, such as electric vehicles, battery charging stations, as well as solar power generation, wind power generation, and the like, which use the batteries. The anode for a lithium secondary battery of the present disclosure and the lithium secondary battery including the same may be used in eco-friendly electric vehicles, hybrid vehicles, and the like, which are aimed at mitigating climate change by reducing air pollution and greenhouse gas emissions.

### [Brief Description of Drawings]

FIGS. 1 and 2 are schematic cross-sectional views illustrating an anode for a secondary battery according to exemplary embodiments.
FIGS. 3 and 4 are schematic plan and cross-sectional views, respectively, illustrating a lithium secondary battery according to exemplary embodiments.

### [Mode for Carrying out Invention]

According to exemplary embodiments, an anode for a lithium secondary battery may include an anode active material layer having a multilayer structure, and the lithium secondary battery may include the anode.

Hereinafter, the embodiments of the present disclosure will be described in more detail with reference to the accompanying drawings. However, the drawings attached to the present disclosure are merely illustrative of some embodiments of the present disclosure to aid in understanding the technical spirit of the invention together with the foregoing description. Therefore, the present disclosure should not be construed as being limited to the matters illustrated in the drawings.

As used herein, the terms "lower surface," "upper surface," and the like, are used in a relative sense to distinguish the positions of components, and do not specify absolute positions.

### <Anode for lithium secondary battery>

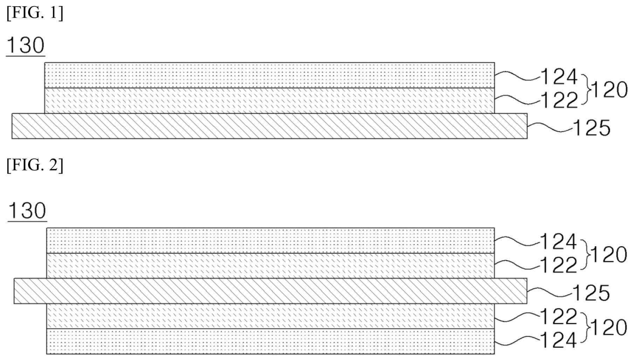

FIG. 1 is a schematic cross-sectional view illustrating an anode for a lithium secondary battery (hereinafter, also abbreviated as anode) according to exemplary embodiments.

Referring to FIG. 1, an anode 130 may include an anode current collector 125 and an anode active material layer 120.

The anode 130 may include the anode current collector 125 and the anode active material layer 120 formed by coating an anode active material on at least one surface of the anode current collector 125.

According to exemplary embodiments, the anode active material layer 120 may have a multilayer structure including a first anode active material layer 122 and a second anode active material layer 124.

The anode current collector 125 may include, for example, gold, stainless steel, nickel, aluminum, titanium, copper, or an alloy thereof. In one embodiment, the anode current collector 125 may include copper or a copper alloy.

The anode active material layer 120 may be formed on at least one surface of the anode current collector 125. The anode active material layer 120 may be coated on at least one of upper and lower surfaces of the anode current collector 125. The anode active material layer 120 may be in direct contact with the surface of the anode current collector 125.

According to exemplary embodiments, the first anode active material layer 122 may be formed directly on the surface of the anode current collector 125. The second anode active material layer 124 may be formed directly on the surface of the first anode active material layer 122.

The first anode active material layer 122 may include a first anode active material including at least one of a first carbon-based active material and a first silicon-based active material. The second anode active material layer 124 may include a second anode active material including at least one of a second carbon-based active material and a second silicon-based active material.

The first carbon-based active material and the second carbon-based active material may each include, for example, at least one of artificial graphite, natural graphite, hard carbon, soft carbon, coke, carbon black, and fibrous carbon.

The first silicon-based active material and the second silicon-based active material may each include at least one of silicon (Si), a silicon alloy, SiOx (0<x<2), SiOx (0<x<2) containing lithium or magnesium compounds, and a silicon-carbon composite. For example, the SiOx containing lithium or magnesium compounds may include SiOx pretreated with lithium or magnesium. For example, the SiOx containing lithium or magnesium compounds may include lithium silicate or magnesium silicate.

In some embodiments, the first silicon-based active material and the second silicon-based active material may include at least one of SiOx (0<x<2) and a silicon-carbon composite. Accordingly, volume expansion of the silicon-based active material may be suppressed, and metal charging performance may be further improved.

In some embodiments, the first carbon-based active material may include a graphite-based active material. For example, graphite may be used alone as the first carbon-based active material. For example, the graphite may include artificial graphite, natural graphite, or a mixture thereof.

When artificial graphite is used alone as the first carbon-based active material, it may compensate for deterioration in the cycle life and stability of the lithium secondary battery. When natural graphite is used alone as the first carbon-based active material, the capacity and output properties of the lithium secondary battery may be enhanced. When a mixture of artificial graphite and natural graphite is used as the first carbon-based active material, the mechanical stability of the anode or the secondary battery may be enhanced through the artificial graphite, while additional capacity and output properties may be achieved through the natural graphite.

In some embodiments, the weight (e.g., weight-based content) of the second carbon-based active material included in the second anode active material layer 124 may be greater than that of the second silicon-based active material included in the second anode active material layer 124. The silicon-based active material may have a high lithium-ion storage capacity, thereby improving the capacity properties of the secondary battery, and the carbon-based active material may have high-temperature stability, thereby improving the high-temperature stability of the secondary battery. Since the weight of the second carbon-based active material may be greater than that of the second silicon-based active material, the high-temperature stability of the second anode active material layer 124, which serves as a substantial active anode by being closer to the cathode and/or electrolyte, may be improved.

In some embodiments, the content of the second silicon-based active material may be included in an amount of 2% by weight ("wt%") to 50 wt%, 5 wt% to 50 wt%, 10 wt% to 50 wt%, 20 wt% to 50 wt%, 30 wt% to 50 wt%, 30 wt% to 45 wt%, 35 wt% to 45 wt%, or 38 wt% to 42 wt% based on the total weight of the second anode active material layer 124. Within this range, lithiation may be promoted from the surface of the anode 130 through the second anode active material layer 124, and the mobility of lithium ions may be increased, thereby improving the fast-charging properties of the secondary battery.

In some embodiments, the weight of the first carbon-based active material included in the first anode active material layer 122 may be greater than that of the second carbon-based active material included in the second anode active material layer 124. Accordingly, the stability of the anode 130 through the first anode active material layer 122 adjacent to the anode current collector 125 may be enhanced, while the capacity of the secondary battery through the second anode active material layer 124, which serves as a substantial active anode, may be increased.

According to exemplary embodiments, the first anode active material layer 122 and the second anode active material layer 124 may each include a first conductive material and a second conductive material. In some embodiments, the first conductive material and/or the second conductive material may include a carbon nanotube (CNT). The carbon nanotube may be used as the first conductive material and/or the second conductive material to enhance the electrical conductivity of the anode active material layer 120, and the charging properties may be further improved through combination with a silicon-based active material.

In some embodiments, the second conductive material may include carbon nanotubes. Accordingly, the charging properties of the second anode active material layer 124, which serves as a substantial active anode, may be enhanced.

In some embodiments, the carbon nanotube may include a single-walled carbon nanotube (SWCNT). Accordingly, the single-walled carbon nanotube may suppress excessive expansion of the silicon-based active material included in the anode active material layer 120, thereby enhancing the stability of the secondary battery.

In one embodiment, the content of the single-walled carbon nanotube may be 0.01 wt% to 1 wt%, 0.01 wt% to 0.5 wt%, 0.05 wt% to 0.5 wt%, or 0.05 wt% to 0.3 wt% based on the total weight of the anode active material layer 120. For example, the single-walled carbon nanotubes may be included in each of the first anode active material layer 122 and the second anode active material layer 124 within the above range.

Within the above range, the mobility of lithium ions may remain undiminished, thereby preventing deterioration in the capacity and charge properties of the anode active material layer 120, while enhancing the stability of the anode 130.

In some embodiments, the carbon nanotube included in the second anode active material layer 124 may have a Raman R value of 0.5 or less. For example, the Raman R value of the carbon nanotube may be 0.01 to 0.5, 0.01 to 0.4, 0.01 to 0.3, or 0.01 to 0.1.

The Raman R value may be defined as the ratio (I_{D}/I_{G}) of the intensity of the D band (I_{D}) and the intensity of the G band (I_{G}) in a Raman spectrum obtained through Raman spectroscopy.

The intensity (I_{D}) of the D band is the peak intensity in the wavenumber range of approximately 1,300 cm⁻¹ to approximately 1,420 cm⁻¹ in the Raman spectrum, and the intensity (I_{G}) of the G band is the peak intensity in the wavenumber range of approximately 1,540 cm⁻¹ to approximately 1,620 cm⁻¹ in the Raman spectrum.

The D band is attributed to a symmetric vibrational mode and is not observed in a perfectly ordered lattice structure. For example, when carbon atoms forming a hexagonal structure are present, the D band may appear when the hexagonal structure is poorly developed or contains defects. The G band is a peak commonly observed in carbon-based materials and may appear, for example, when carbon atoms forming the hexagonal structure are present. Accordingly, the Raman R value may be used as an indicator of the crystallinity or structural defects in the carbon atomic structure.

In one embodiment, the single-walled carbon nanotube having a Raman R value within the above-described range may be used as the carbon nanotubes included in the second anode active material layer 124.

Within the Raman R value range, the resistance of the second anode active material layer 124 may decrease, and its electrical conductivity may increase. In addition, the stability of the second anode active material layer 124 may be enhanced, thereby enabling the fast-charging properties to be maintained over an extended period even at high temperatures.

In some embodiments, the first conductive material and the second conductive material may further include carbon-based conductive materials such as graphite, carbon black, or graphene; and/or metal-based conductive materials such as tin, tin oxide, and titanium oxide; as well as perovskite materials such as LaSrCoO₃, and LaSrMnO₃.

In some embodiments, the first conductive material may not include the carbon nanotube. Accordingly, the capacity of the first carbon-based active material in the first anode active material layer 122 may increase, and the high-temperature stability may be enhanced.

In one embodiment, a conductive material other than the carbon nanotube may be used as the first conductive material, while a conductive material including the carbon nanotube may be used as the second conductive material.

According to exemplary embodiments, the second anode active material layer 124 may include a conductive polymer. By including the conductive polymer in the second anode active material layer 124, the resistance of the anode 130 may decrease, and the output properties may improve without increasing the content of the above-described conductive material in the second anode active material layer 124.

The conductive polymer may be formed from a monomer including, for example, poly(p-phenylene) (PPP), polypyrrole (PPy), polythiophene (PT), polyacetylene, polyaniline (PANI), poly(3,4-ethylenedioxythiophene) (PEDOT), polyfluorene, polypyrene, polyazulene, polynaphthalene, polycarbazole, or polyindole (PIN).

In one embodiment, the conductive polymer may be formed from a monomer including at least one of poly(p-phenylene) (PPP), polypyrrole (PPy), polythiophene (PT), polyacetylene, polyaniline (PANI), and poly(3,4-ethylenedioxythiophene) (PEDOT). Accordingly, even when a small amount of the conductive polymer is used, the resistance of the second anode active material layer 124 may decrease, and the electrical conductivity may be enhanced.

In some embodiments, the conductive polymer may be included in an amount of 0.01 wt% to 1.5 wt%, 0.01 wt% to 1.0 wt%, 0.01 wt% to 0.5 wt%, 0.01 wt% to 0.3 wt%, or 0.05 wt% to 0.15 wt% based on the total weight of the second anode active material layer 124. Within this range, the electrical conductivity may be enhanced without reducing the capacity properties of the second anode active material layer 124.

In one embodiment, the weight ratio of the content of the conductive polymer in the second anode active material layer 124 to the content of the second conductive material in the second anode active material layer 124 may be 0.01 to 2.0, 0.05 to 2.0, 0.1 to 2.0, 0.3 to 2.0, 0.5 to 1.5, or 0.7 to 1.3. For example, the weight ratio of the conductive polymer in the second anode active material layer 124 to the carbon nanotube in the second anode active material layer 124 may be within the above range. Within this range, a reduction in the resistance of the anode 130 and improvement in the output and fast-charging properties may be achieved through the conductive polymer without increasing the content of the second conductive material included in the second anode active material layer 124.

In some embodiments, the conductive polymer may be included only in the second anode active material layer 124. For example, the first anode active material layer 122 may not include the conductive polymer. Accordingly, the conductivity of the second anode active material layer 124, which serves as a substantial active anode, may be enhanced, while the stability of the anode 130 may be improved through the first anode active material layer 122.

According to exemplary embodiments, the first anode active material and the first conductive material described above may be mixed and stirred with a binder and/or a dispersant in a solvent to prepare a first anode slurry. The first anode slurry may be coated on at least one surface of the anode current collector 125, followed by drying and compression to form the first anode active material layer 122.

According to exemplary embodiments, the second anode active material, the second conductive material, and the conductive polymer described above may be mixed and stirred with a binder and/or a dispersant in a solvent to prepare a second anode slurry. The first anode slurry may be coated on at least one surface of the anode current collector 125, followed by drying and compression to form the first anode active material layer 122.

The solvent may be an aqueous solvent or a non-aqueous solvent. For example, deionized water may be used as the aqueous solvent, and N-methyl-2-pyrrolidone (NMP), dimethylformamide, dimethylacetamide, N,N-dimethylaminopropylamine, ethylene oxide, or tetrahydrofuran may be used as the non-aqueous solvent.

A binder for forming an anode may include, for example, an aqueous binder such as styrene-butadiene rubber (SBR) to ensure compatibility with the carbon-based active material, and may be used together with a thickener such as carboxymethyl cellulose (CMC).

FIG. 2 is a schematic cross-sectional view illustrating an anode for a lithium secondary battery according to exemplary embodiments.

Referring to FIG. 2, the anode active material layer 120 may include the first anode active material layer 122 formed directly on both surfaces of the anode current collector 125 and the second anode active material layer 124 formed on the first anode active material layer 122. For example, the anode active material layer 120 may include a two-layer structure in which the first anode active material layer 122 and the second anode active material layer 124 are sequentially disposed on both surfaces of the anode current collector 125.

### <Lithium secondary battery>

According to exemplary embodiments, a lithium secondary battery may include the above-described anode for a secondary battery.

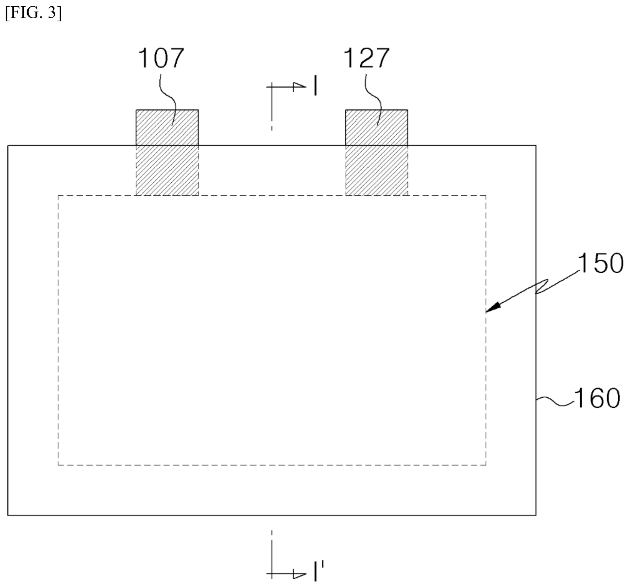

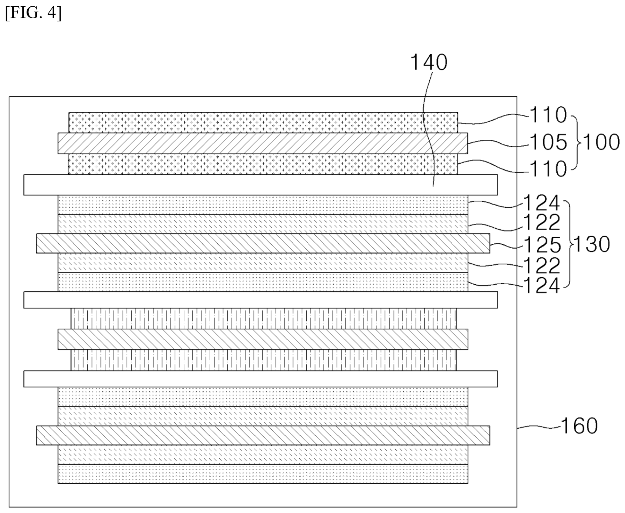

FIGS. 3 and 4 are schematic plan and cross-sectional views, respectively, illustrating the lithium secondary battery according to exemplary embodiments.

Referring to FIGS. 3 and 4, the lithium secondary battery may include a cathode 100 and the anode 130, and may further include a separator 140 interposed between the cathode 100 and the anode 130.

The cathode 100 may include a cathode active material layer 110 formed by coating a cathode active material onto a cathode current collector 105. The cathode active material may include a compound capable of reversibly intercalating and deintercalating lithium ions.

In exemplary embodiments, the cathode active material may include a lithium-nickel metal composite oxide.

For example, the lithium-nickel metal composite oxide may further include at least one of cobalt (Co) and manganese (Mn). In one embodiment, the cathode active material may include a Ni-Co-Mn (NCM)-based lithium oxide.

In some embodiments, the cathode active material or the lithium-nickel metal composite oxide may include a layered structure or a crystal structure represented by Formula 1 below.

[Formula 1] LiₓNiₐM_{b}O_{2+z}

In Formula 1, x, a, b and z may satisfy 0.9≤x≤1.2, 0.6≤a≤0.99, 0.01≤b≤0.4, and - 0.5≤z≤0.1. As described above, M may include Co and/or Mn.

The chemical structure represented by Formula 1 indicates a bonding relationship among elements included in the layered structure or the crystal structure of the cathode active material, and does not exclude the presence of additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element that contributes to the capacity/output activity of the cathode active material together with Co or Mn, such as Al.

For example, the cathode active material or the lithium-nickel metal oxide may include a layered structure or a crystal structure represented by Formula 1-1 below.

[Formula 1-1] LiₓNiₐM1_{b1}M2_{bs}O_{2+z}

In Formula 1-1, M1 may include Co and/or Mn. M2 may include the auxiliary elements described above. In Formula 1-1, x, a, b1, b2 and z may satisfy 0.9≤x≤1.2, 0.6≤a≤0.99, 0.01≤b1+b2≤0.4, and -0.5≤z≤0.1.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of the lithium-nickel metal composite oxide particles, or may penetrate through the surface of the lithium-nickel metal composite oxide particles to be incorporated into the bonding structure represented by Formula 1 or Formula 1-1 above.

For example, a cathode slurry may be prepared by mixing the cathode active material with a binder, a conductive material, and/or a dispersant in a solvent, followed by stirring the same. The prepared cathode slurry may be applied to the cathode current collector 105, and then dried and roll-pressed to prepare the cathode 100.

As the cathode current collector 105, materials which are substantially the same as or similar to those used in the anode current collector 125 may be used. The cathode current collector 105 may include, for example, stainless steel, nickel, aluminum, titanium, or alloys thereof. The cathode current collector 105 may also include aluminum or stainless steel having a surface treated with carbon, nickel, titanium, or silver.

As the solvent, materials which are substantially the same as or similar to those used for the preparation of the first anode slurry and the second anode slurry may be used.

The binder may include an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, the amount of the binder for forming the cathode active material layer 110 may be reduced and the amount of the cathode active material may be relatively increased. Thereby, the output and capacity of the secondary battery may be improved.

The conductive material may be included to facilitate electron transfer between the active material particles. For example, the conductive material may include carbon-based conductive materials such as graphite, carbon black, or graphene; and/or metal-based conductive materials such as tin, tin oxide, and titanium oxide; as well as perovskite materials such as LaSrCoO₃, and LaSrMnO₃.

As the anode 130, the above-described anode for a secondary battery may be used.

The separator 140 may be interposed between the cathode 100 and the anode 130. The separator 140 may include a porous polymer film made of a polyolefin polymer such as ethylene homopolymer, propylene homopolymer, ethylene/butene copolymer, ethylene/hexene copolymer, or ethylene/methacrylate copolymer. The separator 140 may include a nonwoven fabric made of glass fibers having a high melting point, polyethylene terephthalate fibers, etc.

According to exemplary embodiments, an electrode cell is defined by the cathode 100, the anode 130, and the separator 140, and a plurality of the electrode cells may be stacked to form an electrode assembly 150, for example, in the form of a jelly roll. For example, the electrode assembly 150 may be formed by winding, stacking, or folding the separator 140.

The electrode assembly may be accommodated in the case 160 together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methylpropyl carbonate, dipropyl carbonate, dimethyl sulfoxide (DMSO), acetonitrile, dimethoxyethane, diethoxyethane, vinylene carbonate, sulfolane, γ-butyrolactone, propylene sulfite, tetrahydrofuran, and the like may be used. These compounds may be used alone or in combination of two or more thereof.

As illustrated in FIG. 3, electrode tabs (cathode tabs and anode tabs) may protrude from the cathode current collector 105 and the anode current collector 125, respectively, which belong to respective electrode cells, and may extend to one side of the case 160. The electrode tabs may be fused or welded together with the one side of the case 160 to form electrode leads (a cathode lead 107 and an anode lead 127) that extend or are exposed to the outside of the case 160.

The lithium secondary battery may be manufactured, for example, in a cylindrical, prismatic, pouch, or coin type using a can.

Hereinafter, the embodiments of the present disclosure will be further described with reference to specific experimental examples. The examples and comparative examples included in the experimental examples are merely illustrative of the present disclosure and do not limit the scope of the appended claims. It will be apparent to those skilled in the art that various changes and modifications to the examples can be made within the scope and technical spirit of the present disclosure, and it is also understood that such changes and modifications fall within the scope of the appended claims.

### Examples and Comparative Examples

### Example 1

### 1) Preparation of anode

A mixture of 35 wt% SiO_{1.8}, 40 wt% artificial graphite, and 15 wt% natural graphite as a first anode active material, 0.1 wt% SWCNT and 1.9 wt% Super C as a second anode conductive material, 3 wt% styrene-butadiene rubber (SBR) as a binder, and 5 wt% carboxymethyl cellulose (CMC) as a thickener were introduced and mixed in deionized water to obtain a first anode slurry.

The first anode slurry was coated on a Cu foil current collector, followed by drying and roll-pressing to form a first anode active material layer.

A mixture of 35 wt% SiOx (0 < x < 2) as a second anode active material, 40 wt% artificial graphite, and 15 wt% natural graphite, 0.1 wt% SWCNT and 1.8 wt% Super C as a second anode conductive material, 0.1 wt% polyacetylene as a conductive polymer, 3 wt% styrene-butadiene rubber (SBR) as a binder, and 5 wt% carboxymethyl cellulose (CMC) as a thickener were introduced and mixed in a deionized water solvent to obtain a second anode slurry.

The Raman R value of the SWCNT used as the second anode conductive material was 0.08.

The second anode slurry was coated on the first anode active material layer, followed by drying and roll-pressing to form a second anode active material layer, thereby fabricating an anode.

The Raman R value (I_{D}/I_{G}) of the SWCNT in the second anode active material layer was calculated by measuring the peak intensity (I_{D}) of the D band (approximately 1,350 cm⁻¹) and the peak intensity (I_{G}) of the G band (approximately 1,580 cm⁻¹). The measurement equipment and conditions are as follows:
i) Raman spectrometer: inVia, Renishaw (UK)
ii) Argon ion laser wavelength: 532 nm
iii) Exposure time: 10 seconds
iv) Number of accumulations: 10

### 2) Manufacture of cathode and secondary battery

A cathode slurry was prepared by mixing LiNi_{0.8}Co_{0.1}Mn_{0.1}O₂ as a cathode active material, a mixture of carbon black and a carbon nanotube (CNT) as a cathode conductive material, and polyvinylidene fluoride (PVDF) as a cathode binder in distilled water at a weight ratio of 94:2:4. The cathode slurry was coated on an aluminum foil current collector, and then dried, and roll-pressed to fabricate a cathode.

A battery was constructed by interposing a separator (polyethylene, thickness: 13 µm) between the fabricated cathode and anode, and welding the tabs of the cathode and the anode, respectively.

The welded cathode/separator/anode assembly was placed in a pouch, and the tabbed portion was included in the sealing area to seal three sides, leaving one side open for electrolyte injection. A secondary battery was then manufactured by injecting an electrolyte through the remaining open side, sealing the final side, and impregnating for 12 hours.

The electrolyte used herein was prepared by dissolving 1 M LiPF₆ in a mixed solvent of EC/EMC/DEC (25/45/30; volume ratio), and adding 5 wt% of fluorinated ethylene carbonate (FEC), 0.5 wt% of propane sulfone (PS), and 0.5 wt% of ethylene sulfate (ESA).

### Examples 2 to 10 and Comparative Examples 1 to 5

Secondary batteries of Examples 2 to 10 and Comparative Examples 1 to 5 were manufactured in the same manner as in Example 1, except that the type and content of the active material included in the anode, the contents of Super C, SWCNT, and polyacetylene in the second anode active material layer, and the Raman R value of the SWCNT used as the second conductive material were adjusted as shown in Tables 1 and 2 below.

**[TABLE 1]**

| Classification | Type of active material | | | |
|---|---|---|---|---|
| | First anode active material | | Second anode active material | |
| | Type | Content (wt%) | Type | Content (wt%) |
| Example 1 | SiO_{1.8} | 35 | SiO_{1.8} | 35 |
| | SiC | - | SiC | - |
| | Artificial graphite | 40 | Artificial graphite | 40 |
| | Natural graphite | 15 | Natural graphite | 15 |
| Example 2 | SiO_{1.8} | 35 | SiO_{1.8} | 35 |
| | SiC | - | SiC | - |
| | Artificial graphite | 40 | Artificial graphite | 40 |
| | Natural graphite | 15 | Natural graphite | 15 |
| Example 3 | SiO_{1.8} | 35 | SiO_{1.8} | 35 |
| | SiC | - | SiC | - |
| | Artificial graphite | 40 | Artificial graphite | 40 |
| | Natural graphite | 15 | Natural graphite | 15 |
| Example 4 | SiO_{1.8} | 35 | SiO_{1.8} | 35 |
| | SiC | - | SiC | - |
| | Artificial graphite | 40 | Artificial graphite | 40 |
| | Natural graphite | 15 | Natural graphite | 15 |
| Example 5 | SiO_{1.8} | - | SiO_{1.8} | - |
| | SiC | - | SiC | 40 |
| | Artificial graphite | 70 | Artificial graphite | 35 |
| | Natural graphite | 20 | Natural graphite | 15 |
| Example 6 | SiO_{1.8} | - | SiO_{1.8} | - |
| | SiC | - | SiC | 40 |
| | Artificial graphite | 70 | Artificial graphite | 35 |
| | Natural graphite | 20 | Natural graphite | 15 |
| Example 7 | SiO_{1.8} | - | SiO_{1.8} | - |
| | SiC | - | SiC | 40 |
| | Artificial graphite | 70 | Artificial graphite | 35 |
| | Natural graphite | 20 | Natural graphite | 15 |
| Example 8 | SiO_{1.8} | - | SiO_{1.8} | - |
| | SiC | - | SiC | 40 |
| | Artificial graphite | 70 | Artificial graphite | 35 |
| | Natural graphite | 20 | Natural graphite | 15 |
| Example 9 | SiO_{1.8} | 35 | SiO_{1.8} | 35 |
| | SiC | - | SiC | - |
| | Artificial graphite | 40 | Artificial graphite | 40 |
| | Natural graphite | 15 | Natural graphite | 15 |
| Example 10 | SiO_{1.8} | - | SiO_{1.8} | 35 |
| | SiC | 35 | SiC | - |
| | Artificial graphite | 40 | Artificial graphite | 40 |
| | Natural graphite | 15 | Natural graphite | 15 |
| Comparative Example 1 | SiO_{1.8} | 35 | SiO_{1.8} | 35 |
| | SiC | - | SiC | - |
| | Artificial graphite | 40 | Artificial graphite | 40 |
| | Natural graphite | 15 | Natural graphite | 15 |
| Comparative Example 2 | SiO_{1.8} | 35 | SiO_{1.8} | 35 |
| | SiC | - | SiC | - |
| | Artificial graphite | 40 | Artificial graphite | 40 |
| | Natural graphite | 15 | Natural graphite | 15 |
| Comparative Example 3 | SiO_{1.8} | - | SiO_{1.8} | - |
| | SiC | 20 | SiC | 20 |
| | Artificial graphite | 50 | Artificial graphite | 50 |
| | Natural graphite | 20 | Natural graphite | 20 |
| Comparative Example 4 | SiO_{1.8} | 35 | SiO_{1.8} | 35 |
| | SiC | - | SiC | - |
| | Artificial graphite | 40 | Artificial graphite | 40 |
| | Natural graphite | 15 | Natural graphite | 15 |
| Comparative Example 5 | SiO_{1.8} | - | SiO_{1.8} | 35 |
| | SiC | 35 | SiC | - |
| | Artificial graphite | 40 | Artificial graphite | 40 |
| | Natural graphite | 15 | Natural graphite | 15 |

**[TABLE 2]**

| Classification | Type of active material layer | Super C content (wt%) | SWCNT content (wt%) | Polyacetylene content (wt%) | Raman R value (I_{D}/I_{G}) |
|---|---|---|---|---|---|
| Example 1 | First anode active material layer | 1.9 | 0.1 | - | 0.08 |
| | Second anode active material layer | 1.8 | 0.1 | 0.1 | |
| Example 2 | First anode active material layer | 1.9 | 0.1 | - | 0.08 |
| | Second anode active material layer | 1.65 | 0.1 | 0.25 | |
| Example 3 | First anode active material layer | 1.9 | 0.1 | - | 0.55 |
| | Second anode active material layer | 1.8 | 0.1 | 0.1 | |
| Example 4 | First anode active material layer | 1.9 | 0.1 | - | *0.55* |
| | Second anode active material layer | 1.65 | 0.1 | 0.25 | |
| Example 5 | First anode active material layer | 2.0 | - | - | 0.08 |
| | Second anode active material layer | 1.8 | 0.1 | 0.1 | |
| Example 6 | First anode active material layer | 2.0 | - | - | 0.08 |
| | Second anode active material layer | 1.65 | 0.1 | 0.25 | |
| Example 7 | First anode active material layer | 2.0 | - | - | 0.55 |
| | Second anode active material layer | 1.8 | 0.1 | 0.1 | |
| Example 8 | First anode active material layer | 2.0 | - | - | 0.55 |
| | Second anode active material layer | 1.65 | 0.1 | 0.25 | |
| Example 9 | First anode active material layer | 1.8 | 0.1 | 0.1 | 0.08 |
| | Second anode active material layer | 1.8 | 0.1 | 0.1 | |
| Example 10 | First anode active material layer | 1.8 | 0.1 | 0.1 | 0.08 |
| | Second anode active material layer | 1.8 | 0.1 | 0.1 | |
| Comparative Example 1 | First anode active material laver | 1.8 | 0.2 | - | 0.5 |
| | Second anode active material layer | 1.8 | 0.2 | - | |
| Comparative Example 2 | First anode active material layer | 1.9 | 0.1 | - | 0.1 |
| | Second anode active material layer | 1.9 | 0.1 | - | |
| Comparative Example 3 | First anode active material layer | 1.9 | 0.1 | - | 0.3 |
| | Second anode active material layer | 1.9 | 0.1 | - | |
| Comparative Example 4 | First anode active material layer | 1.8 | 0.1 | 0.1 | 0.1 |
| | Second anode active material layer | 1.8 | 0.2 | - | |
| Comparative Example 5 | First anode active material layer | 1.8 | 0.1 | 0.1 | 0.1 |
| | Second anode active material layer | 1.8 | 0.2 | - | |

### Experimental Example

### (1) Measurement of resistance of secondary battery

The secondary batteries according to the examples and comparative examples were charged at 0.5C under CC/CV conditions (4.2 V, 0.05C cut-off) at room temperature (25 °C), and then discharged at 0.5C CC to reach 60% state of charge (SOC).

At 60% SOC, the C-rate was varied to 0.2C, 0.5C, 1C, 1.5C, 2C, 2.5C, and 3.0C, and the DC internal resistance (DCIR) was measured by performing discharge and charge for 10 seconds each.

### (2) Evaluation of room-temperature fast charge properties

The secondary batteries of the examples and comparative examples were fast-charged for 20 minutes at room temperature (25 °C) at 82% SOC10 in segments. After repeated discharges (0.33C, SOC10, CC cut-off), the discharge capacity retention after 300 cycles was measured as a percentage of the initial discharge capacity.

### (3) Evaluation of room-temperature cycle properties

The secondary batteries of the examples and comparative examples were charged (CC-CV, 2.0C, 4.2 V, SOC4 98% cut-off) and discharged (CC 2.0C, 2.75 V cut-off) 250 times at room temperature (25 °C). The discharge capacity at 250 cycles was calculated as a percentage of the discharge capacity at the first cycle, and the room-temperature cycle properties were measured.

The evaluation results are shown in Table 3 below.

**[TABLE 3]**

| Classification | Resistance of secondary battery (DCIR, mΩ) | Fast-charging properties (300 cycles, %) | Room-temperature cycling properties (250 cycles, %) |
|---|---|---|---|
| Example 1 | 1.245 | 82.5 | 90.5 |
| Example 2 | 1.249 | 81.9 | 90.2 |
| Example 3 | 1.246 | 81.1 | 90.0 |
| Example 4 | 1.250 | 80.7 | 89.9 |
| Example 5 | 0.999 | 95.5 | 92.5 |
| Example 6 | 1.032 | 94.8 | 92.1 |
| Example 7 | 1.008 | 94.1 | 92.0 |
| Example 8 | 1.048 | 92.1 | 91.7 |
| Example 9 | 1.247 | 80.1 | 89.8 |
| Example 10 | 1.249 | 80.0 | 89.6 |
| Comparative Example 1 | 1.251 | 79.5 | 89.5 |
| Comparative Example 2 | 1.265 | 75.0 | 84.9 |
| Comparative Example 3 | 1.104 | 81.9 | 86.1 |
| Comparative Example 4 | 1.254 | 79.5 | 89.6 |
| Comparative Example 5 | 1.258 | 79.3 | 89.4 |

Referring to Table 3, the examples including conductive polymers showed reduced resistance of the secondary battery and improved fast-charge and room-temperature cycling properties compared to comparative examples 1 to 3, which did not include conductive polymers.

Examples 1 to 8, in which the conductive polymer was included only in the second anode active material layer, showed slightly reduced resistance and improved fast-charge and room-temperature cycling properties compared to examples 9 and 10, which included conductive polymers in both the first and second anode active material layers.

Furthermore, examples 1 to 8, in which the conductive polymer was included only in the second anode active material layer, showed reduced resistance and improved fast-charge and room-temperature cycling characteristics compared to comparative examples 4 and 5, in which the conductive polymer was included only in the first anode active material layer.

Examples 2 and 6, in which the ratio of acetylene to SWCNT included in the second anode active material layer exceeded 2.0, showed slightly increased resistance properties of the secondary battery.

Examples 3 and 7, in which the Raman R value of the SWCNT included in the second anode active material layer exceeded 0.5, showed slightly decreased fast-charge and room-temperature cycling characteristics.

Examples 4 and 8, in which both the ratio of acetylene to SWCNT in the second anode active material layer exceeded 2.0 and the Raman R value of the SWCNT exceeded 0.5, showed a slight increase in resistance of the secondary battery, while the fast-charge and room-temperature cycling properties decreased slightly.

In examples 5 to 8, in which graphite (a mixture of artificial graphite and natural graphite) was used alone as the active material in the first anode active material layer, the resistance of the secondary battery decreased slightly, while the fast-charge and room-temperature cycling properties improved slightly.

Examples 9 and 10, in which the first and second anode active material layers contained conductive polymers, showed a slight increase in resistance, and slightly decreased fast-charge and room-temperature cycling properties.

Comparative examples 1 to 3, which did not include a conductive polymer in the second anode active material layer, showed increased resistance of the secondary battery and decreased fast-charge and room-temperature cycling properties.

Comparative examples 4 and 5, which included a conductive polymer in the first anode active material layer, showed increased resistance of the secondary battery and decreased fast-charge and room-temperature cycling properties.

## Claims

1. An anode for a secondary battery comprising:
an anode current collector;
a first anode active material layer formed on at least one surface of the anode current collector and comprising a first anode active material including at least one of a first carbon-based active material and a first silicon-based active material; and
a second anode active material layer formed on the first anode active material layer and comprising a second anode active material including at least one of a second carbon-based active material and a second silicon-based active material and a conductive polymer.

2. The anode for a secondary battery according to claim 1, wherein the first carbon-based active material includes a graphite-based active material.

3. The anode for a secondary battery according to claim 1, wherein the first silicon-based active material and the second silicon-based active material each include at least one of SiOx (0<x<2) and a silicon-carbon composite.

4. The anode for a secondary battery according to claim 1, wherein the weight of the second carbon-based active material included in the second anode active material layer is greater than the weight of the second silicon-based active material included in the second anode active material layer.

5. The anode for a secondary battery according to claim 1, wherein the second silicon-based active material is included in an amount of 2% by weight to 50% by weight based on the total weight of the second anode active material layer.

6. The anode for a secondary battery according to claim 1, wherein the weight of the first carbon-based active material included in the first anode active material layer is greater than the weight of the second carbon-based active material included in the second anode active material layer.

7. The anode for a secondary battery according to claim 1, wherein the second anode active material layer comprises a second conductive material including a carbon nanotube (CNT).

8. The anode for a secondary battery according to claim 7, wherein the carbon nanotube include a single-walled carbon nanotube (SWCNT).

9. The anode for a secondary battery according to claim 8, wherein the single-walled carbon nanotube is included in an amount of 0.01% by weight to 1% by weight based on the total weight of the second anode active material layer.

10. The anode for a secondary battery according to claim 7, wherein the carbon nanotube has a Raman R value of 0.5 or less, and
the Raman R value is defined as the ratio (I_{D}/I_{G}) of the intensity of the D band (I_{D}) and the intensity of the G band (I_{G}) in a Raman spectrum obtained through Raman spectroscopy.

11. The anode for a secondary battery according to claim 7, wherein the weight ratio of the content of the conductive polymer in the second anode active material layer to the content of the carbon nanotube in the second anode active material layer is 0.01 to 2.

12. The anode for a secondary battery according to claim 7, wherein the first anode active material layer does not include a carbon nanotube.

13. The anode for a secondary battery according to claim 1, wherein the conductive polymer is formed from a monomer including at least one of poly(p-phenylene) (PPP), polypyrrole (PPy), polythiophene (PT), polyacetylene, polyaniline (PANI), and poly(3,4-ethylenedioxythiophene) (PEDOT).

14. The anode for a secondary battery according to claim 1, wherein the first anode active material layer does not include a conductive polymer.

15. The anode for a secondary battery according to claim 1, wherein the conductive polymer is included in an amount of 0.01% by weight to 1.5% by weight based on the total weight of the second anode active material layer.

16. A lithium secondary battery comprising:
the anode for a secondary battery according to claim 1; and
a cathode disposed opposite the anode.
